# EUROPÄISCHE PATENTANMELDUNG

(11) **EP 4 293 437 A1**
(43) Veröffentlichungstag der Anmeldung: **20.12.2023**
(21) Anmeldenummer: 22305874.4
(22) Anmeldetag: 15.06.2022
(51) Int. Cl.: G05B 19/04, G06F 9/48

(54) **VERFAHREN UND VORRICHTUNG ZUM STEUERN DES ABLAUFS VON PROGRAMMTEILEN, PROGRAMMIERVERFAHREN, PROGRAMMIERVORRICHTUNG**

(71) Anmelder: Schneider Electric Industries SAS, 92500 Rueil-Malmaison (FR)
(72) Erfinder: Diehm, Sebastian, 97907 Hasloch (DE); Würr, Marcus, 97837 Erlenbach (DE)
(74) Vertreter: Manitz Finsterwald Patent- und Rechtsanwaltspartnerschaft mbB

(57) **Zusammenfassung**

Ein Verfahren zum Steuern des Ablaufs von Programmteilen hat folgende Schritte: veranlasst durch das Auftreten eines ersten Ereignisses (E1) Ausführen eines ersten Programmteils (P1) auf einem ersten Rechenwerk (RW1), wobei dem ersten Ereignis (E1) und/oder dem ersten Programmteil (P1) eine erste Priorität (Py1) zugewiesen ist, und veranlasst durch das Auftreten eines zweiten Ereignisses (E2) Unterbrechen der Ausführung des ersten Programmteils (P1) und dann Ausführen eines zweiten Programmteils (P2) auf dem ersten Rechenwerk (RW1), wobei dem zweiten Ereignis (E2) und/oder dem zweiten Programmteil (P2) eine zweite Priorität (Py2) zugewiesen ist, die höher als die erste Priorität (Py1) ist, wobei das erste und/oder das zweite Programmteil (P1, P2) ein funktionaler Block im Sinne der IEC 61499 oder ein Teil davon oder eine davon veranlasste Datenübertragung ist.

## Beschreibung

Die Erfindung betrifft ein Verfahren und eine Vorrichtung zum Steuern des Ablaufs von Programmteilen. Sie betrifft insbesondere Verfahren und Vorrichtungen zum Steuern des Ablaufs von Steuerungsprogrammen, vorzugsweise auf speicherprogrammierten Steuerungen und entsprechend der Norm IEC 61499. Das Verfahren bzw. die Vorrichtung kann in einem industriellen Kontext stehen, etwa als Steuerungsrechner einer Fertigungsanlage oder einer Logistikanlage oder ähnliches.

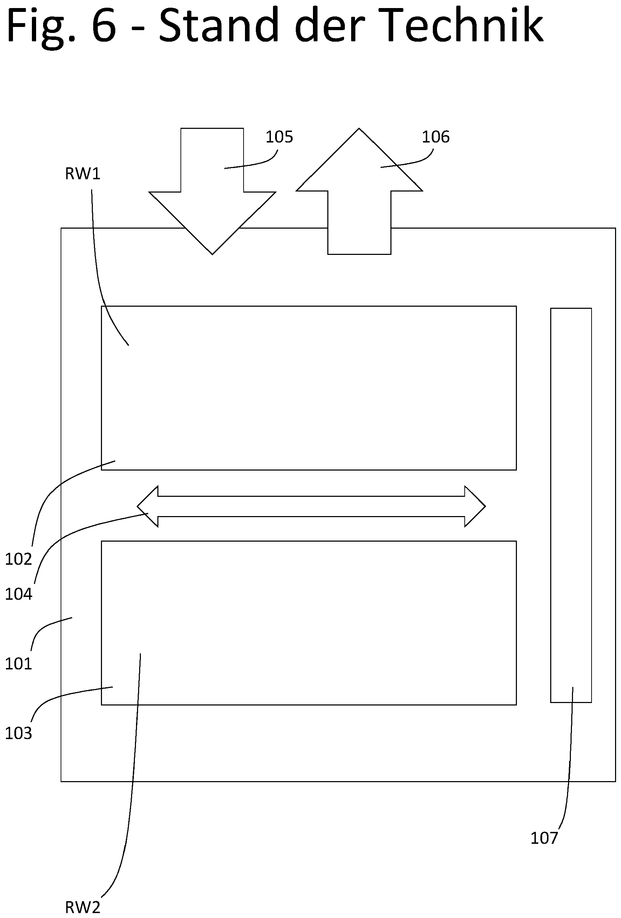

Fig. 6 zeigt schematisch den Aufbau einer solchen Steuerungsvorrichtung. 101 ist die hier größte dargestellte Einheit. Es kann sich beispielsweise um eine Platine handeln. 102 und 103 können hier getrennte Hardwarekomponenten sein, etwa unterschiedliche Prozessoren auf der gleichen Platine. Sie stellen unterschiedliche Rechenwerke RW dar, die parallel einerseits unabhängig voneinander arbeiten können, aber andererseits auch Zugriff auf gleiche Ressourcen, etwa Daten oder periphere Hardwarekomponenten wie Schnittstellen oder ähnliches verlangen können. Eine nur schematisch gezeigte Betriebssteuerung 107 nimmt die nötigen Steuerungsschritte vor, um den sicheren unabhängigen und gegeneinander ungestörten Betrieb der einzelnen Rechenwerke RW zu gewährleisten.

Anders als bisher beschrieben können die unterschiedlichen Rechenwerke aber auch virtuelle Rechenwerke auf einer einzigen Hardware sein. Festzuhalten ist aber in jedem Fall, dass die Rechenwerke effizient in gewisser Weise in Konkurrenz zueinander stehen. Virtuelle Rechenwerke bekommen Rechenzeit der realen Hardware zugewiesen, die zusammen nicht mehr als 100 % der verfügbaren Zeit sein kann. Und die Rechenwerke können auf gemeinsame periphere Ressourcen zugreifen. Insoweit ist die Darstellung in der Fig. 6 nur beispielhaft zu verstehen. Ein wesentlicher Aspekt für die Erfindung ist, dass zwei oder allgemein mehrere in ihren Ressourcen limitierte Rechenwerke parallel vorhanden sind. Die Frage, wie sie implementiert sind, ist demgegenüber zunächst zweitrangig.

Die Rechenwerke RW1 und RW2 können untereinander und nach extern kommunizieren. Die Kommunikation untereinander ist nur höchst schematisch mit Pfeil 104 angedeutet. Je nach Art der Implementierung der Rechenwerke kann diese Kommunikation unterschiedliche Techniken nutzen, etwa Kommunikation auf Betriebssystemebene, Buskommunikation, Netzwerkkommunikation und ähnliches. Soweit Rechenwerke untereinander kommunizieren, wird die Kommunikation in der Regel digital vonstattengehen. Mit den Pfeilen 105 und 106 ist von extern eingehende Kommunikation und nach extern ausgehende Kommunikation symbolisiert. Es kann sich auch hier um digitale Kommunikation handeln, etwa von anderen digitalen Komponenten. Oder es können analoge Signale sein, wie sie etwa von Sensoren eingehen oder an Aktoren ausgegeben werden. Dementsprechend können nicht gezeigte Wandler, etwa A/D-Wandler oder umgekehrt D/A-Wandler und womöglich nötige Treiber auch vorhanden sein.

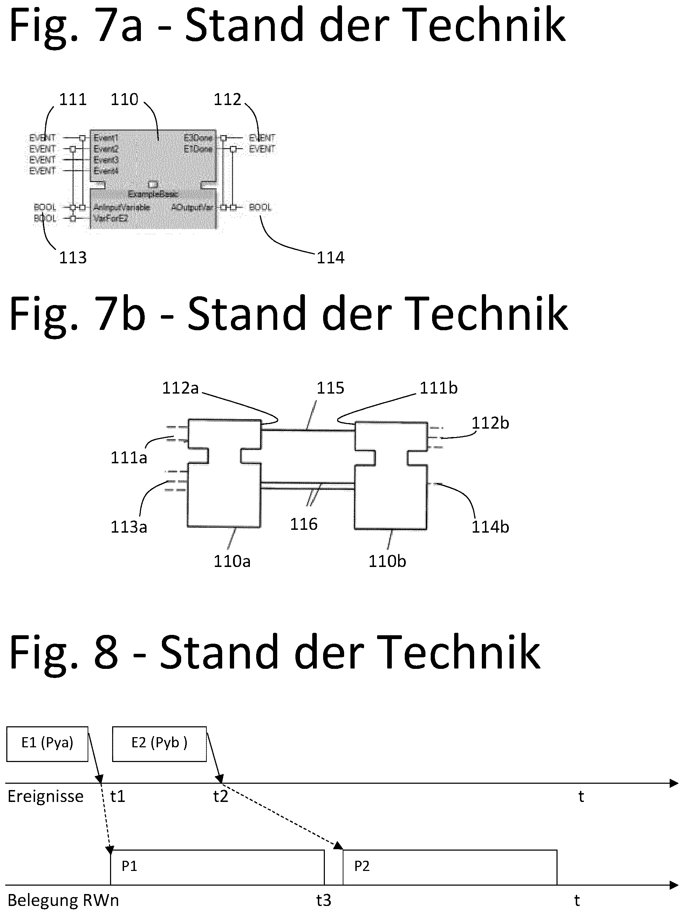

Die in Fig. 6 gezeigte Struktur dient der Ausführung eines Steuerungsprogramms, das vorzugsweise konform zur IEC 61499 angelegt ist. In der IEC 61499 sind die Programme als aus Funktionsblöcken FB bestehend beschrieben. Die Fig. 7a zeigt beispielhaft die Darstellung eines solchen Funktionsblocks 110. Oben links sind ihn anstoßende Eingangsereignisse 111 symbolisiert. Oben rechts sind vom Funktionsblock 110 generierte Ausgangsereignisse 112 symbolisiert. Wesentlich dabei ist, dass ein Funktionsblock 110 durch ein eingehendes Ereignis 111 zur Abarbeitung angestoßen wird, und dass er selbst als Ausgabe insbesondere am Ende seiner Tätigkeit ein ausgehendes Ereignis 112 oder mehrere solche Ereignisse erzeugen kann, um einen oder mehrere weitere Funktionsblöcke 110 zur Ausführung anzustoßen oder externe Veranlassungen zu treffen. Unten links sind mit 113 eingehende Daten symbolisiert, die der Funktionsblock 110 für seine Tätigkeit als Eingang empfängt. Unten rechts sind mit 114 ausgehende Daten symbolisiert, die der Funktionsblock 110 erzeugt und anderen Funktionsblöcken oder insgesamt anderen digitalen Komponenten zur Verfügung stellt.

Fig. 7b zeigt die symbolhafte Darstellung des Zusammenwirkens zweier Funktionsblöcke 110a und 110b. Angenommen ist, dass der irgendwie angestoßene Funktionsblock 110a als Ergebnis seiner Tätigkeit den Funktionsblock 110b anstößt. Erreicht wird dies, indem der Funktionsblock 110a an seinem Ereignisausgang 112a ein Ereignis generiert, das dem Ereigniseingang 111b des zweiten Funktionsblocks 110b zugeführt wird. Dies ist durch die Verbindung 115 symbolisiert. Parallel hierzu ist es möglich, aber nicht in jedem Fall notwendig, dass die Funktionsblöcke 110a und 110b Daten in der Weise austauschen, dass der anstoßende Funktionsblock 110a dem angestoßenen Funktionsblock 110b Daten zur Verfügung stellt. Dies ist durch Verbindungen 116 symbolisiert. Allerdings kann der Funktionsblock 110b die von ihm womöglich benötigten Eingangsdaten auch von anderen Quellen beziehen, und der Funktionsblock 110a kann Ausgabedaten an andere Empfänger schicken.

Ergänzend zu dem, was gezeigt ist, ist es möglich, dass ein Funktionsblock 110 an seinem Ereignisausgang 112 mehrere Ereignisse generiert, die zum quasi gleichzeitigen Anstoßen mehrerer unterschiedlicher Funktionsblöcke führen können. Auch kann ein Funktionsblock 110 an seinem Ereigniseingang 111 mehrere Ereignisse von unterschiedlichen Quellen empfangen und so durch unterschiedliche Ereignisse angestoßen werden.

Ein Steuerungsprogramm, wie es beispielsweise auf der in Fig. 6 schematisch gezeigten Hardware laufen kann, besteht aus einer Kombination mehrerer oder vieler Funktionsblöcke, wie sie in den Fig. 7a, b gezeigt sind. Wenn ein Funktionsblock zur Ausführung angestoßen wird, wird er von der Betriebssteuerung 107 einem der Rechenwerke zur Ausführung zugewiesen. Die Betriebssteuerung 107 ist eine allgemeine Steuerungsvorrichtung, die übergeordnet die synchronisierenden und steuernden Maßnahmen für die einzelnen Rechenwerke durchführt. Sie arbeitet derart, dass sie beispielsweise die Rechenzeitzuweisungen logisch etablierter Rechenwerke auf einer realen CPU überwacht und steuert, dass sie eingehende und ausgehende Datenkommunikation richtig zuordnet, das ereignis- und prioritätsgesteuerte Ausführen von Funktionsblöcken auf Rechenwerken veranlasst und vieles mehr.

Wenn in einem oder womöglich auch in mehreren gleichzeitig laufenden Steuerungsprogrammen mehrere Funktionsblöcke 110 parallel auf mehreren Rechenwerken RW ausgeführt werden, kann es in verschiedenen Konstellationen zu Zugriffskonflikten kommen. Fig. 8 zeigt einen sehr fundamentalen Ablauf hierzu. Die obere Zeile zeigt längs der Zeitachse das Auftreten unterschiedlicher Ereignisse, während die untere Grafik die Belegung eines bestimmten Rechenwerks RWn zeigt. Angenommen ist, dass zum Zeitpunkt t1 ein erstes Ereignis E1 ein erstes Programmteil P1 anstößt, etwa einen Funktionsblock 110 wie oben dargestellt. Dieser wird infolge dann auf dem unten symbolisierten Rechenwerk RWn ausgeführt. Die Ausführung endet zum Zeitpunkt t3. Weiter angenommen ist, dass zum Zeitpunkt t2, der vor dem Zeitpunkt t3 liegt, ein weiteres Ereignis E2 auftritt. Nimmt man an, dass kein weiteres Rechenwerk als das dargestellte Rechenwerk RWn zur Verfügung steht, ist in diesem Zustand es in speicherprogrammierten Steuerungen nicht möglich, ein ggf. durch das Ereignis E2 angestoßenes Programmteil P2, insbesondere einen Funktionsblock 110, auszuführen. Vielmehr wird bis nach dem Zeitpunkt t3 gewartet, dass das Rechenwerk RWn frei wird, um dann den Programmteil P2 bzw. Funktionsblock 110, der dem zweiten Ereignis E2 entspricht, auszuführen.

Ereignissen oder den von ihnen veranlassten Programmteilen bzw. Funktionsblöcken 110 können Prioritäten zugewiesen sein. Prioritäten haben relativ untereinander dahingehend Bedeutung, dass bei dem schon angesprochenen Wettbewerb um Ressourcen, etwa Rechenzeit auf einer realen CPU oder Zuweisungen realer Rechenwerken, höher priorisierte Ereignisse gegenüber niedriger priorisierten Ereignissen bevorzugt abgearbeitet werden. Wenn viele Ereignisse in kurzer Zeit zu erwarten sind, werden Warteschlangen, englisch "queue" genannt, gebildet. In diesen Warteschlangen finden sich nach bestimmten strukturellen Kriterien Ereignisse unterschiedlicher Prioritäten. Die Priorität kann dann die Folge haben, dass das höchstpriorisierte Ereignis in der Warteschlange unmittelbar zur Ausführung herangezogen wird, während niedriger priorisierte Ereignisse warten müssen.

Aber auch im Falle der Fig. 8 hat ein hoch priorisiertes Ereignis, falls es wie in Fig. 8 gezeigt zum Zeitpunkt t2 auftritt, mindestens bis zum Zeitpunkt t3 zu warten, um ausgeführt werden zu können. Dies ist nachteilig, wenn beispielsweise niedrig priorisierte Ereignisse mit langen Ausführungsdauern verfügbare Rechenwerke langdauernd beanspruchen und so verhindern, dass ein hoch priorisiertes Ereignis ausgeführt werden kann.

Aufgabe der Erfindung ist es, ein Verfahren und eine Vorrichtung zum Steuern des Ablaufs von Programmteilen anzugeben, die eine verbesserte prioritätsgemäße Steuerung des Ablaufs von Programmteilen ermöglichen.

Diese Aufgabe wird mit den Merkmalen der unabhängigen Patentansprüche gelöst.

Ein Verfahren zum Steuern des Ablaufs von Programmteilen hat die Schritte: veranlasst durch das Auftreten eines ersten Ereignisses Ausführen eines ersten Programmteils auf einem ersten Rechenwerk, wobei dem ersten Ereignis und/oder dem ersten Programmteil eine erste Priorität zugewiesen ist, und veranlasst durch das Auftreten eines zweiten Ereignisses Unterbrechen der Ausführung des ersten Programmteils auf dem ersten Rechenwerk und dann Ausführen eines zweiten Programmteils auf dem ersten Rechenwerk, wobei dem zweiten Ereignis und/oder dem zweiten Programmteil eine zweite Priorität zugewiesen ist, wobei die zweite Priorität eine vorbestimmte und insbesondere benutzerdefinierte Relation zur ersten Priorität hat, wobei die zweite Priorität höher als die erste Priorität sein kann, wobei das erste und/oder das zweite Programmteil ein funktionaler Block im Sinne der IEC 61499 oder ein Teil davon oder eine davon veranlasste Datenübertragung ist, und/oder wobei das erste Programmteil ein beim Auftreten des zweiten Ereignisses auf dem ersten Rechenwerk laufendes Programm ist.

Mit dem dargestellten Verfahren ist es prioritätsgesteuert möglich, ein laufendes Programmteil zu unterbrechen, um ein anderes Programmteil ausführen zu können. Insbesondere sind die Einrichtungen so, dass ein höher priorisiertes Programmteil ein niedriger priorisiertes Programmteil unterbrechen kann. Es wird auf diese Weise vermieden, dass ein hoch priorisiertes Programmteil bzw. ein hoch priorisiertes Ereignis lange durch niedrig priorisierte Programmteile, die vorher angestoßen wurden, an der Ausführung gehindert oder stark verlangsamt wird. Auch diese Unterbrechungen werden durch die Betriebssteuerung 107 durchgeführt und implementiert und verwaltet. Gleiches gilt für ein spätere Fortführen des vorher unterbrochenen Programmteils.

Soweit in dieser Beschreibung auf Gestaltungen gemäß IEC 61499 Bezug genommen wird und beispielsweise Konformität dargestellt ist, ist dies als so weit gehend zu verstehen, wie es für die Funktion der Erfindung notwendig ist oder soweit es nicht durch die beschriebenen Merkmale der Erfindung abgeändert ist.

Wie schon dargestellt, können die Programmteile Teile eines Geräte- oder Anlagensteuerungsprogramms sein. Dieses kann mit vielen externen Komponenten kommunizieren, darunter analoge und digitale. Ganz allgemein ausgedrückt ist die Ablaufsteuerung wenigstens teilweise ereignis- und prioritätsgesteuert. Dies bedeutet, dass Programmteile bzw. funktionale Blöcke ereignisgesteuert und untereinander priorisiert aufgerufen werden. Wenn Rechenleistung bzw. Rechenwerke zur Verfügung steht bzw. stehen, können die Programmteile unmittelbar ausgeführt werden. Andernfalls werden sie bzw. die sie anstoßenden Ereignisse in eine oder mehrere Ereignislisten, auch Warteschlangen genannt, gestellt, die nach bestimmten Kriterien abgearbeitet werden.

Ein wichtiges Merkmal der Erfindung ist es, dass die Ereignisse und/oder Programmteile Prioritäten zugewiesen haben. Die Prioritäten können dabei Ausführungsdringlichkeiten des jeweiligen Programmteils bzw. des ein Programmteil anstoßenden Ereignisses angeben. Beispielhaft wird in dieser Beschreibung manchmal davon ausgegangen, dass vier Prioritäten existieren. Sie sind mit 1, 2, 3 und 4 durchnummeriert. Beispielsweise kann jedem Ereignis einer dieser Prioritäten zugeordnet sein. Dabei ist angenommen, dass Priorität 1 die höchste Priorität ist, also die höchste Ausführungsdringlichkeit angibt, und danach absinkend die Prioritäten 2, 3 und 4 jeweils geringere Ausführungsdringlichkeiten angeben. Ereignissen oder Programmteilen innerhalb eines betrachteten Steuerungsprogramms können Prioritäten bei der Programmierung zugewiesen worden sein. Von extern eintreffende Ereignisse können Prioritäten nach Maßgabe der verwendeten Schnittstelle oder ähnliches zugewiesen sein.

Die zugewiesenen Prioritäten führen zu eindeutigen Ergebnissen in der Betriebssteuerung, soweit Ereignisse oder Programmteile unterschiedlicher Prioritäten miteinander konkurrieren dahingehend, dass das höher priorisierte Ereignis oder Programmteil vor dem niedriger priorisierten ausgeführt wird. Soweit Ereignisse oder Programmteile mit gleichen Prioritäten konkurrieren, können weitere Strategien den Konflikt lösen, etwa "Round Robin", FIFO ("First In, First Out"), LIFO ("Last In, First Out") oder ähnliches.

Das System führt deshalb Warteschlangen für Ereignisse bzw. Programmteile, die nicht unmittelbar ausgeführt werden können. Dabei können für mehrere Prioritäten jeweils eigene Ereignislisten im Sinne von Warteschlangen geführt werden, die jeweils aufgetretene Ereignisse der jeweils zugeordneten Priorität speichern, die noch abzuarbeitenden Programmteile bezeichnen. Das oben genannte zweite Ereignis wird dann in die seiner Priorität entsprechende Ereignisliste eingetragen und wird dann, wenn in keiner Ereignisliste für eine höhere Priorität ein Eintrag vorhanden ist, entsprechend den Abarbeitungsregeln für die Einträge in der Ereignisliste der eigenen Priorität, etwa round robin, FIFO, LIFO, ggf. für die Unterbrechung der Ausführung des ersten Programmteilsauf dem ersten Rechenwerk herangezogen.

Zu laufenden Programmteilen sind in geeigneter Weise deren Prioritäten oder die Prioritäten der sie aufrufenden Ereignisse gespeichert, damit diese in den prioritätsbasierten Vergleich einbezogen werden können. Es können so die Ereignislisten von oben, d.h. von der höchsten Priorität her, weg und in Relation zu den Prioritäten ggf. laufender Programmteile abgearbeitet werden. Diese Prioritäten können z. B. gemeinsam tabelliert sein, was dann jeweils aktualisiert und fortgeschrieben würde und dann, wenn benötigt, abgerufen werden kann, oder es kann eine Einholroutine für diese Prioritäten vorgesehen sein, die die verschiedenen Prioritäten aus verteilten Quellen, z. B. den Definitionen der laufenden Tasks, einholt, wenn sie benötigt werden.

Für das Verfahren können mehrere Tasks genutzt werden, die vorab als jeweilige Ausführungsumgebungen angelegt wurden. Das Anlegen einer Task als Ausführungsumgebung kann die Konfiguration der Priorität, mit der die Task ausgeführt werden soll, in Relation passend zu den Prioritäten der Ereignisse bzw. Funktionsblöcke und den Prioritäten der Ereigniswarteschlangen, umfassen, und/oder kann eine Verknüpfung bzw. Zuordnung zu der Ereignisliste der entsprechenden Priorität umfassen. Eine Ausführungsumgebung wird so durch einen vorab definierten, gespeicherten und zum Ausführungszeitpunkt abrufbaren Parametersatz definiert. Der Parametersatz bildet Einstellungen des Rechenwerks, die bei der Ausführung eines Programmteils genützt werden.

Sie sind dann vorab definiert und organisiert und bedürfen so zum Ausführungszeitpunkt keiner übergeordneten administrativen Tätigkeit, so dass sie schnell zur Verfügung stehen. Die Zuordnung und diesbezügliche Steuerung nimmt die Betriebssteuerung 107 vor. Auch die Rechenwerke sind vorgegeben oder vorab definiert und organisiert und bedürfen so zum Ausführungszeitpunkt keiner übergeordneten administrativen Tätigkeit, so dass sie schnell zur Verfügung stehen.

Wenn beispielsweise vier Prioritäten definiert sind, können für jede dieser Prioritäten ein oder mehrere Tasks angelegt sein und ihnen zur Ausführung zugeordnet sein. Die Zuordnung und diesbezügliche Steuerung nimmt die Betriebssteuerung 107 vor.

Es können aber auch Tasks genützt werden, die in Echtzeit als jeweilige Ausführungsumgebung angelegt werden, vorzugsweise in Antwort auf ein auftretendes Ereignis, und die in Echtzeit entfernt werden, vorzugsweise am Ende der Abarbeitung eines Programmteils, wobei die Rechenwerke nach Maßgabe der Prioritäten der sie auslösenden Ereignisse aktiviert werden.

Diese Variante ist vorteilhaft, wenn eher wenige, länger dauernde Programmteile zur Ausführung anstehen. Es entsteht dann kein Verwaltungsaufwand für die Verwaltung nicht benötigter Rechenwerke. Es wird aber nachteilig, wenn viele Ereignisse zur Ausführung anstehen, denn selbst wenn viele Tasks angelegt werden, erhöht dies nicht die tatsächlich zur Verfügung stehenden Ressourcen, so dass womöglich vergeblicher administrativer Aufwand zum Anlegen von Tasks getrieben wird.

Das zweite Ereignis, das zur Unterbrechung des ersten Programmteils auf dem ersten Rechenwerk führt, wird in der Regel von einem auf einem anderen Rechenwerk laufenden anderen Programmteil erzeugt. Denkbar ist allerdings auch, dass ein Programmteil ein Ereignis erzeugt, das das erzeugende Programmteil selbst unterbricht.

Zur Entscheidung dahingehend, ob die Unterbrechung eines laufenden Programmteils nötig ist oder nicht, können Überwachungsergebnisse erzeugt oder eingeholt werden. Es kann sich dabei um Überwachungsergebnisse hinsichtlich der Aktivität der einzelnen Rechenwerke handeln. Diese Überwachungsergebnisse können von den beschriebenen Verfahren selbst erzeugt werden, z. b. von der Betriebssteuerung 107, oder sie können von anderen Systemkomponenten, etwa dem Betriebssystem, eingeholt werden, z. B. durch die Betriebssteuerung 107. Wenn anhand der Überwachungsergebnisse erkennbar ist, dass Rechenwerke leer laufen oder angesichts verfügbarer Rechenzeit verwendet werden können, ist die Unterbrechung eines Programmteils für die Ausführung eines höher priorisierten Programmteils nicht nötig. Vielmehr kann das höher priorisierte Programmteil dann z. B. einer leer laufenden Task zugewiesen werden, oder es kann hierfür eine neue Task angelegt werden.

Über die Zuweisung der Ausführung von Programmteilen, insbesondere des zweiten Programmteils, zu einem der überwachten Rechenwerke kann auch nach Maßgabe von Eigenschaften der überwachten Rechenwerke entschieden werden. Dies trägt dem Umstand Rechnung, dass nicht alle Rechenwerke gleich sein müssen, sondern beispielsweise hinsichtlich Rechenleistung, Datenanbindung und ähnlichem unterschiedlich sein können. Auch im Hinblick auf solche Kriterien können Zuweisungen auszuführender Programmteile zu Rechenwerken erfolgen und können dann ggf. zu den beschriebenen Unterbrechungen führen.

Ein Programmteil kann selbst aus unterscheidbaren Unterteilen bestehen. Die ggf. nötige Unterbrechung der Ausführung des ersten Programmteils kann nach Abarbeitung eines solchen im ersten Programmteil enthaltenen Unterteils und vor Beginn der Abarbeitung eines weiteren solchen Unterteils im ersten Programmteil erfolgen. Ggf. kann die Unterbrechung aber auch an beliebiger Stelle des Programmteils oder eines Unterteils davon erfolgen.

Es können Programmteile auch nach Maßgabe einer Ausführungssteuerungsplanung gemäß IEC 61499, der sog. "execution control chart", aufgerufen und abgearbeitet werden, wobei der Aufruf eines Programmteils aus der Ausführungssteuerungsplanung das die Ausführung des ersten Programmteils bewirkende erste Ereignis und/oder das die Ausführung des zweiten Programmteils bewirkenden zweiten Ereignisses sein kann, dem eine Priorität zugewiesen werden kann oder schon zugewiesen ist. Die prioritätsgesteuerte Abarbeitung dieser Ereignisse kann die sonst folgenden Festlegungen der Ausführungssteuerungsplanung überschreiben oder abwandeln. Auf diese Weise kann eine operative Verbindung zum bekannten Ansatz unter IEC 61499 der Benützung der "Execution Control Chart" - "ECC" - hergestellt werden. Es wird so das Verfahren der IEC 61499 teilweise genützt und teilweise überschrieben.

Das Unterbrechen der Ausführung des ersten Programmteils kann das Sicherungsspeichern des momentan relevanten Gerätezustands umfassen, insbesondere das Speichern der Werte von Rechenwerk, Registern, Datenspeichern, Programmspeicher, Programmzeiger, Dateien. Das Fortsetzen des vorher unterbrochenen Programmteils kann dann das Laden des bei der Unterbrechung sicherungsgespeicherten Gerätezustands für das die Fortsetzung übernehmende Rechenwerk umfassen. Auf diese Weise wird bewirkt, dass ein unterbrochenes Programmteil die Abarbeitung an der logischen Stelle fortsetzen kann, wo vorher die Abarbeitung beendet wurde.

Es ist es möglich, Programmteile als ununterbrechbar oder nicht mehrfach parallel ausführbare Programmteile auszuweisen, so dass sie auch auf Anforderung durch eine höher priorisiertes Ereignis hin nicht unterbrochen oder nicht durch eine höher priorisiert aufgerufene Task ein weiteres Mal parallel ausgeführt werden können. Dies kann beispielsweise sinnvoll sein, wenn es sich um ein Programmteil handelt, dessen Zustände nicht zwischengespeichert werden können, weil sie beispielsweise extern liegen oder voluminös sind oder ähnliches. Selbst wenn dann also nach dem bisher beschriebenen Verfahren eine Unterbrechung oder Parallelausführung eines Programmteils vorgenommen würde, unterbleibt diese, wenn eine Überprüfung ergeben hat, dass das zur Unterbrechung vorgesehene Programmteil als ununterbrechbar oder nicht mehrfach parallel ausführbare markiert ist.

Auch Gegenstand der Erfindung ist eine Vorrichtung gemäß IEC 61499 zur Durchführung des beschriebenen Verfahrens, die eine Gerätesteuerung oder eine Anlagensteuerung und/oder eine speicherprogrammierte Steuerung sein kann und mindestens einen Sensor oder Dateneingang und mindestens einen Aktor oder Datenausgang aufweisen kann.

Auch Gegenstand der Erfindung ist eine Ausführungsvorrichtung für IEC 61499-konforme Programme. Sie umfasst mindestens zwei Rechenwerke zum parallelen Ausführen von Programmteilen, die von mit Prioritäten markierten Ereignissen ausgelöst werden. Eine Ausführungssteuerung steuert das Ausführen von Programmteilen auf den Rechenwerken basierend auf den Prioritäten, die den die Programmteile auslösenden Ereignissen zugeordnet sind. Die Ausführungssteuerung ist dazu ausgelegt, unter bestimmten Bedingungen die Ausführung eines ersten Programmteils auf einem Rechenwerk zu unterbrechen und auf diesem Rechenwerk die Ausführung eines zweiten Programmteils zu veranlassen, wenn das die Ausführung des zweiten Programmteils auslösende Ereignis höher priorisiert ist als das die Ausführung des ersten Programmteils auslösende Ereignis.

Nochmals wird hier darauf verwiesen, dass ein Bezug auf die IEC 61499 nicht bedeutet, dass diese vollständig umgesetzt ist. Vielmehr kann sie entsprechend den Angaben in dieser Beschreibung abgewandelt sein.

Auch Gegenstand der Erfindung ist ein Programmierverfahren, bei dem eine IEC 61499-konforme Programmierschnittstelle bereitgestellt wird, die zum Programmieren des oben beschriebenen Verfahrens ausgelegt bzw. geeignet ist. Insbesondere ist sie dazu geeignet, die womöglich nötigen Unterbrechungen einzugeben, die ggf. dafür nötigen Datensicherungen und Datensicherungen einzugeben, ggf. die Markierung eines Programmteils als ununterbrechbar oder nicht mehrfach ausführbar einzugeben, und ähnliches. Die Programmierschnittstelle kann dabei eine grafische Benutzerschnittstelle sein oder aufweisen, die zum Eingeben der genannten Schritte ausgelegt ist. Gegenstand der Erfindung ist insoweit dann auch eine Programmiervorrichtung, die das eben beschriebene Programmierverfahren umsetzt.

Nachfolgend werden Bezug nehmend auf die Zeichnungen Ausführungsformen der Erfindung beschrieben, es zeigen
Fig. 1 allgemein die Unterbrechung eines Programmteils,
Fig. 2 konkurrierende Zugriffe auf ein Rechenwerk,
Fig. 3 mehrere Ereignislisten,
Fig. 4a, b ein Beispiel eines Steuerungsprogramms,
Fig. 5a bis c ein Beispiel für einen erfindungsgemäßen Ablauf,
Fig. 6 eine bekannte Ausführungsstruktur,
Fig. 7a, b Funktionsblöcke im Sinne der IEC 61499, und
Fig. 8 ein bekanntes Verfahren.

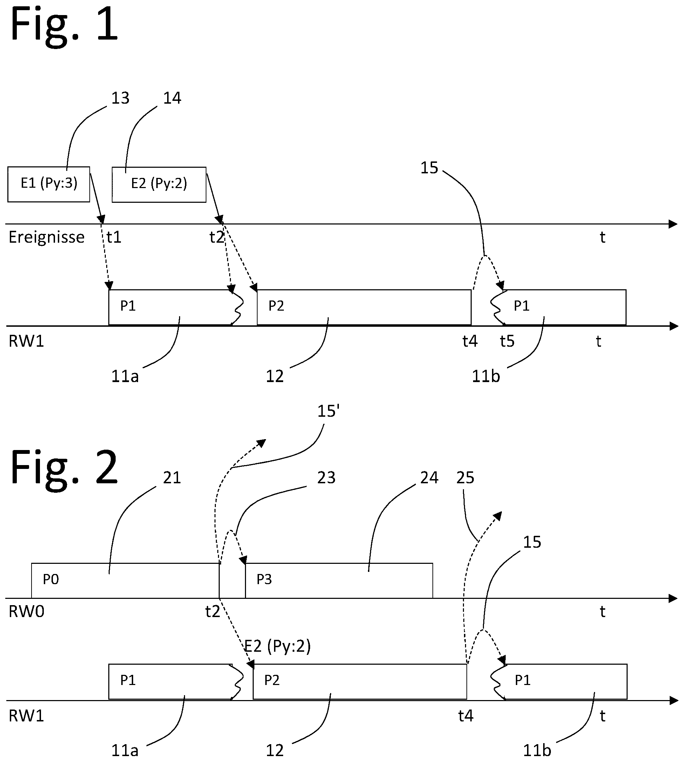

In Fig. 1 zeigt die obere Zeile längs der Zeitachse auftretende Ereignisse. E1 ist ein Ereignis 13, dem eine Priorität Py "3" zugewiesen ist. Allgemein können die Prioritäten den Ereignissen bei der Programmierung des Steuerungsprogramms bzw. der einzelnen Programmteile zugewiesen werden. Es ist angenommen, dass das Ereignis E1 13 zur Ausführung eines ersten Programmteils P1 11a führt. Weiter angenommen ist, dass zum Zeitpunkt t2, zu dem die Abarbeitung des ersten Programmteils P1 noch nicht beendet ist, ein zweites Ereignis E2 14 auftritt. Es hat die Priorität Py 2 und ist damit höher priorisiert als das erste Ereignis E1 13 mit Priorität 3 bzw. das entsprechende erste Programmteil P1.

Unter der Annahme, dass aus systemischen Gründen die Zuweisung des dem zweiten Ereignis E2 zugeordneten zweiten Programmteils P2 auf ein anderes Rechenwerk als das gezeigte Rechenwerk RW1 nicht möglich ist, führt das zweite Ereignis E2 14 dazu, dass das erste Programmteil P1 11a kurz nach dem Zeitpunkt t2 unterbrochen wird, so dass auf dem ersten Rechenwerk RW1 das zweite Programmteil P2 12, das vom zweiten Ereignis E2 14 angestoßen wird, ausgeführt wird.

Es ist weiter angenommen, dass zu einem späteren Zeitpunkt t4 die Abarbeitung des zweiten Programmteils P2 12 beendet ist. Dies ist der Anlass, darauffolgend zu einem Zeitpunkt t5 die Abarbeitung des unterbrochenen ersten Programmteils 11a fortzusetzen, was mit Bezugsziffer 11b bezeichnet ist.

Es wurde schon darauf hingewiesen, dass Programmteile als ununterbrechbar markiert sein können. Wäre dies im Beispiel der Fig. 1 für das Programmteil P1 11 gegeben, würde das Auftreten des zweiten Ereignisses E2 14 zum Zeitpunkt t2 anders als in Fig. 1 gezeigt nicht zur Unterbrechung des ersten Programmteils 11 führen. Vielmehr würde dies fortgesetzt werden, und das dem höher priorisierten zweiten Ereignis E2 14 entsprechende zweite Programmteil P2 müsste einem anderen Rechenwerk zur Ausführung zugewiesen werden oder notfalls konventionell warten.

Fig. 2 zeigt ausführlicher eine Möglichkeit, wie ein Zugriffskonflikt auf Rechenwerke entstehen kann. Anders als in Fig. 1 sind nicht oben Ereignisse und unten eine Rechenwerkbelegung gezeigt, sondern es sind übereinander die Belegungen zweier Rechenwerke mit Programmteilen dargestellt. Angenommen ist, dass anfänglich auf einem Rechenwerk RW0 ein Programmteil P0 21 läuft und dass wie gezeigt später oder womöglich auch früher beginnend auf einem Rechenwerk RW1 ein erstes Programmteil P1 11a mit Priorität Py = 3 läuft. Für das Programmteil P0 21 ist angenommen, dass es am Ende seiner Ausführung zum Zeitpunkt t2 zwei Ereignisse generiert, nämlich das schon in Fig. 1 beschriebene zweite Ereignis E2 der Priorität Py = 2, und ein weiteres Ereignis 23 beispielsweise gleicher Priorität Py = 2.

Das vom Ereignis 23 angestoßene Programmteil 24 kann dann auf dem wegen Beendigung des Programmteils P0 frei gewordenen Rechenwerk RW0 ausgeführt werden, während das Programmteil P2 dort dann nicht ausgeführt werden kann. Demzufolge wird es einem anderen Rechenwerk, dem Rechenwerk RW1, zugewiesen, zu dem angenommen ist, dass zum Zeitpunkt t2 die Abarbeitung des ersten Programmteils P1 11a noch läuft. Auf diesem Rechenwerk RW1 wird dann die Abarbeitung des ersten Programmteils P1 11a unterbrochen, weil das Programmteil P2 12 höher priorisiert aufgerufen wurde, und es findet dort dann die schon dargestellte Abarbeitung des zweiten Programmteils P2 12 statt, die zum Zeitpunkt t4 als beendet angenommen wird.

Zu diesem Zeitpunkt t4 kann das zweite Programmteil P2 12 selbst ein oder mehrere Ereignisse generieren, die seiner regulären Programmierung entsprechen und in Fig. 2 mit Bezugsziffer 25 angedeutet sind. Daneben kann beispielsweise die Betriebssteuerung 107 ein Ereignis 15 hinzufügen, das z. B. in die Ereignislisten eingetragen werden kann und die Wiederaufnahme der Abarbeitung des ersten Programmteils P1 11b anstoßen. Die Wiederaufnahme kann so in die prioritätsgesteuerte Ereignisabarbeitung einbezogen werden. Es ist aber auch möglich, die Wiederaufnahme der Abarbeitung des ersten Programmteils P1 11b direkt nach der Beendigung der Abarbeitung des unterbrechenden Programmteils P2 12 durch die Betriebssteuerung zu veranlassen. Die Betriebssteuerung kann hierfür eine geeignete Auflistung unterbrochener und auf die Wiederaufnahme wartender Programmteile führen.

Es kann auch gleich bei einer in Figuren 1 und 2 gezeigten Programmteilunterbrechung, allgemein also in Reaktion auf eine wegen eines Ereignisses (im Breispiel E2 (Py:2)) vorzunehmende Programmteilunterbrechung, ein weiteres Ereignis 15' definiert bzw. erzeugt werden, etwa durch die Betriebssteuerung 107, nämlich ein Ereignis zum Anstoß der Abarbeitung des unterbrochenen Programmteils. Auch dieses Ereignis 15' kann mit einer Priorität versehen werden. Es kann beispielsweise die Priorität des unterbrochenen Programmteils bekommen, oder sie kann höher gestuft sein, um das unterbrochene Programmteil bevorzugt zu beenden. Dieses weitere Ereignis kann dann in die sonst geführte Ereignisliste 35 oder Ereignislisten 31 - 34 eingetragen werden und zusammen mit den übrigen Ereignissen prioritätsgesteuert abgearbeitet werden.

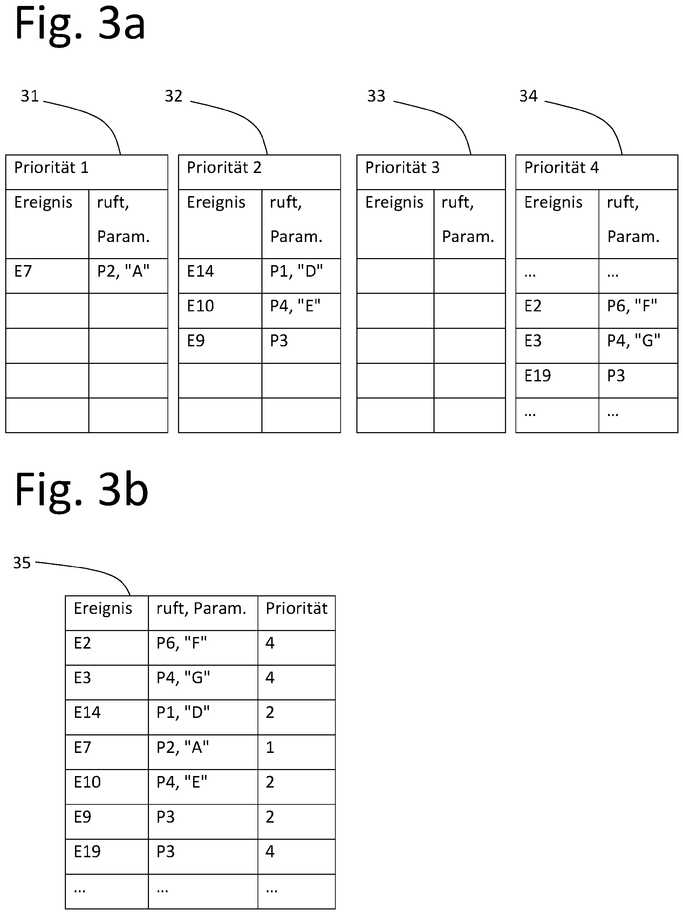

Fig. 3a zeigt eine Möglichkeit der Einrichtung von Ereignislisten, manchmal auch "Warteschlangen" oder englisch "queue" genannt. Gezeigt ist eine Ausführungsform, bei der wieder angenommen ist, dass Ereignisse mit einer von vier Prioritäten versehen sind und für jede dieser Prioritäten 1, 2, 3 und 4 eine eigene Ereignisliste 31, 32, 33, 34 geführt wird. Die Listen selbst müssen dann die Prioritäten der Ereignisse nicht aufführen, da diese ja schon durch die jeweilige Liste selbst vorgegeben sind. Die Liste führt aber jedenfalls tabellarisch die noch abzuarbeitenden Ereignisse der zugehörigen Priorität auf. Sie kann daneben beispielsweise zum jeweiligen Ereignis das Programmteil listen, das vom gelisteten Ereignis aufgerufen wird, und kann ggf. auch Parameter halten, die beim Programmaufruf übergeben werden.

Zur Vermeidung von Missverständnissen wird darauf verwiesen, dass Ereignislisten sich dynamisch ändern, indem betriebsbedingt neue Ereignisse, insbesondere die jüngst generierten, hinzukommen, und früher eingetragene, insbesondere abgearbeitete Ereignisse, gelöscht werden. Konkrete Darstellungen sind dann jeweils Momentaufnahmen.

Wie schon gesagt, können die von Ereignissen angestoßenen Programmteile Funktionsblöcke im Sinne der IEC 61499 sein. Demzufolge wären in der Ausführungsform der Fig. 3a die in den jeweils rechten Spalten gezeigten Angaben Identifizierungen jeweiliger Funktionsblöcke der IEC 61499. Für die Liste 31 der Priorität 1 ist angenommen, dass sie nur ein Ereignis E7 hält, das ein Programmteil P2 mit einem Parametersatz, der nur durch "A" symbolisiert ist, anstößt. Die Ereignisliste 32 für Priorität 2 enthält dementsprechend drei Ereignisse. Zum Ereignis E9 ist angenommen, dass es Programmteil P3 anstößt, für dessen Anstoß keine Parameter übergeben werden müssen. Die Ereignisliste 33 zur Priorität 3 ist als leer angenommen, weil derzeit keine Ereignisse der Priorität 3 zur Abarbeitung anstehen. Die Ereignisliste 34 zur Priorität 4 ist wieder als mit einigen Ereignissen belegt angenommen.

Im beschriebenen Ablaufsteuerungsverfahren kann die Systemsteuerung nun beginnend mit der ersten Ereignisliste 31 die anstehenden Ereignisse abarbeiten. Im Beispiel der Fig. 3a würde deshalb zunächst das Ereignis E7 der Ereignisliste 31 für Priorität 1 zur Ausführung herangezogen werden. Es würde, wenn möglich, einem freien Rechenwerk zur Abarbeitung zugewiesen. Wenn dies nicht möglich ist, würde die Unterbrechung eines niedriger priorisierten Prozesses auf einem belegten Rechenwerk wie beschrieben veranlasst werden. Wenn die Ereignisliste 31 zur Priorität 1 leer ist, kann mit der Abarbeitung der Ereignisse der Ereignisliste 32 zur Priorität 2 begonnen werden. Anders als in der Ereignisliste 31 zur Priorität 1 stehen in der Ereignisliste 32 mehrere Ereignisse. Es ist dann zu entscheiden, nach welchem Kriterium diese abgearbeitet werden. Es können hier Strategien wie FIFO, LIFO oder Round Robin verwendet werden. Wenn zu einem Zeitpunkt im Abarbeitungsverlauf die Ereignislisten 31, 32 und 33 leer sind, kann mit der Abarbeitung der Ereignisse in der Ereignisliste 34 begonnen werden.

Fig. 3b zeigt eine andere Art der Anlage der Ereignisliste. Hier ist über alle Prioritäten hinweg eine einzige Ereignisliste angelegt. Demzufolge muss in dieser Liste auch die Priorität des jeweiligen Ereignisses gelistet sein, denn sonst wäre die Information verloren. Bei der Abarbeitung ist dann aus der Liste jeweils das höchstpriore Ereignis herauszusuchen und wie beschrieben zu verarbeiten.

Die Ereignislistengestaltung gemäß Fig. 3b kann damit korrelieren, dass Rechenwerke nicht vorab definiert und installiert sind, sondern zum Ausführungszeitpunkt installiert werden.

Bisher wurde die ereignis- und prioritätsgesteuerte Ausführung und ggf. Unterbrechung von Programmteilen beschrieben. In gleicher Weise kann dies für die ereignis- und prioritätsgesteuerte Ausführung und ggf. Unterbrechung von Datenübertragungen gelten, die insoweit auch als Programmteile verstanden werden können.

In dieser Beschreibung kann eine Ausführungsumgebung ein in bestimmter Weise durch Parameter konfiguriertes Rechenwerk sein. Eine Task kann ein in einer Ausführungsumgebung laufendes oder lauffähiges Programmteil sein. Ein Rechenwerk kann ein Prozessor mit zugehöriger Hardware sein oder allgemein eine zugeteilte physische Ressource, etwa ein Rechenzeit-Anteil einer multi-tasking-fähigen Hardware. Es kann sich auch um virtuelle Rechen-Ressourcen oder logisch organisierte Rechen-Ressourcen auf einer einzigen Hardware handeln, die jeweils für sich zu einem Zeitpunkt eine Task ausführen. Ein Programmteil kann ein funktionaler Block im Sinne der IEC 61499 sein. Ein Rechenwerk kann ein Core im Sinne der IEC 61499 sein.

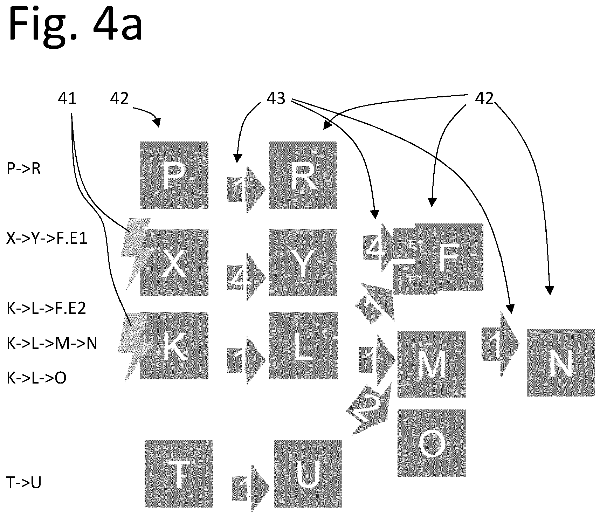

Fig. 4a zeigt beispielhaft ein Steuerungsprogramm und seine durch die Programmierung definierten Programmteile und Ereignisse. Die Quadrate 42 definieren Programmteile P, X, K, T, R, Y, L, U, F, M, O und N. Es kann sich bei ihnen um Funktionsblöcke entsprechend der IEC 61499 handeln. Die Pfeile 43 symbolisieren Ereignisse, mit denen sich Programmteile 42 untereinander anstoßen. Ihnen sind hier Prioritäten Py zugewiesen, die im jeweiligen Pfeil eingetragen sind, also in der linken Pfeilspalte untereinander 1, 4, 1, 1, in der mittleren Pfeilspalte untereinander 4, 1, 1, 2 und rechts 1. Links zeigt fig. 4a die jeweils durch die definierten Ereignisse erzeugten Abläufe.

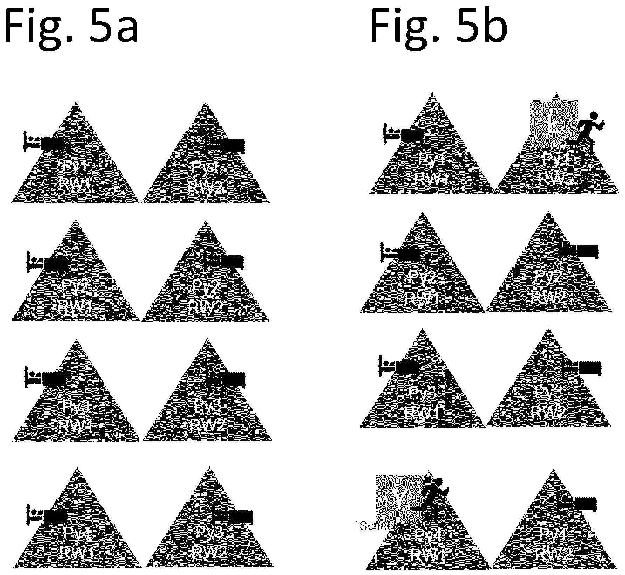

Mit 41 sind Eingangsereignisse definiert, die das Steuerungsprogramm anstoßen und nicht vom Programm selbst veranlasst werden. Es handelt sich dabei regelmäßig um externe Ereignisse, beispielsweise das Eintreffen von Sensordaten, die zu bestimmten Verarbeitungen und resultierend womöglich Geräteansteuerungen führen. In Fig. 5a ist wieder angenommen, dass die Priorität 1 die höchste Dringlichkeit hat und demgegenüber die Prioritäten 2, 3 und 4 abnehmend Dringlichkeiten haben.

In Fig. 4a sei darauf verwiesen, dass ein hier betrachtetes Steuerungsprogramm nur teilweise angestoßen und ausgeführt werden kann. In Fig. 4a ist beispielsweise angenommen, dass die obere Zeile der Funktionsblöcke P und R und die untere Zeile der Funktionsblöcke T und U nicht angestoßen und deshalb nicht ausgeführt wird. Auslösende Ereignisse finden gemäß Fig. 4a nur für die Funktionsblöcke X und K statt, was hier für Zwecke der Erläuterung als mehr oder minder gleichzeitig angenommen wird.

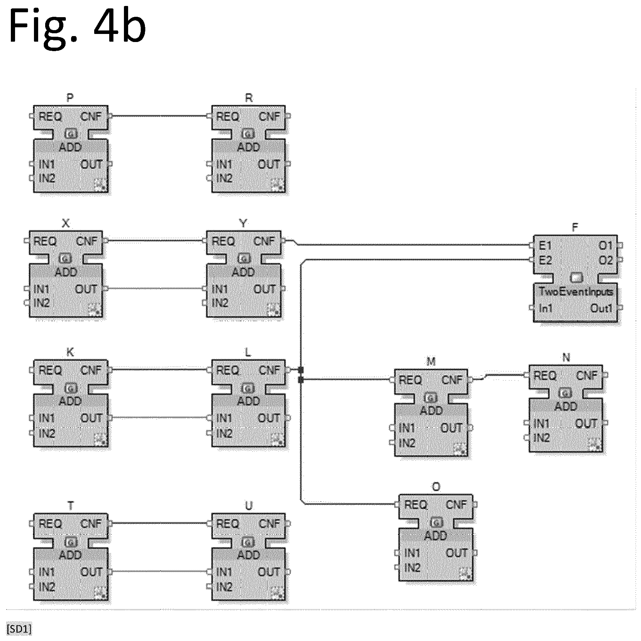

Fig. 4b zeigt die der Fig. 4a entsprechende Darstellung des Steuerungsprogramms mit funktionalen Blöcken im Sinne der IEC 61499. Im oberen Teil sind die Ereignisverbindungen gezeigt, allerdings ohne Prioritäten, die die Ausführung der einzelnen Programmteile bzw. funktionalen Blöcke auslösen.

Die Figuren 5a bis 5c zeigen den dynamischen Ablauf der Abarbeitung des Programms aus den Figuren 4a und 4b. Angenommen ist, dass zwei Rechenwerke vorhanden sind und dass mit vier unterschiedlichen Prioritäten gearbeitet wird. Wie schon gesagt kommen hier die Programmteile P, R, T und U mangels externen Anstoßes nicht zur Ausführung. Sie sind deshalb nicht dargestellt.

Fig. 5a zeigt den Status der Steuerungsvorrichtung, bevor die initialen Ereignisse 41 eintreffen. Die Dreiecke symbolisieren potentiell laufende Tasks, wobei wegen der verfügbaren zwei Rechenwerke RW1 und RW2 max. zwei gleichzeitig ausgeführt werden können. Alle befinden sich im Leerlauf bzw. Ruhezustand. Angenommen ist hier, dass die Tasks vordefiniert sind und dass pro Priorität jeweils zwei Tasks angelegt sind.

Fig. 5a zeigt symbolisch den Systemzustand vor Eintreffen der externen Ereignisse 41 in Fig. 4a. Das Gesamtsystem ruht, alle Rechenwerke laufen leer. Auch alle Warteschlangen sind in diesem Augenblick leer. Nach dem Eintreffen der externen Ereignisse 41, wie in Fig. 4a gezeigt, beginnt das System mit der Abarbeitung der Programmteile X und K, und an deren jeweiligem Ende erzeugen sie Ereignisse der Prioritäten 4 und 1 zum Anstoßen der Programmteile Y und L. Dementsprechend haben am Ende der Abarbeitung der Programmteile X und K die vierte Ereignisliste 34 und die erste Ereignisliste 31 entsprechende Einträge, während die anderen Ereignislisten leer sind. Angenommen wird aber, dass Y ein lange laufendes, niderpriorig angestoßenes Programmteil ist. Es läuft noch, wenn Programmteil L schon abgearbeitet ist.

Wie schon gesagt können auch den eintreffenden externen Ereignisse 41 durch geeignete Schritte Prioritäten zugewiesen werden oder als Voreinstellung angenommen werden. Dies kann in der Betriebssteuerung 107 erfolgen.

Fig. 5b zeigt den Zustand, in dem das System mit der Abarbeitung der Programmteile L und Y beschäftigt ist. In dem Augenblick, in dem mit der Abarbeitung der Programmteile L und Y begonnen wird, werden die jeweiligen Ereignisse aus den jeweiligen Ereignislisten herausgenommen, so dass diese dann wieder leer sind. Programmteil L erzeugt bei seiner Beendigung drei Ereignisse jeweils zum Anstoßen der Programmteile F, M und O. Die ersten beiden haben Priorität 1, das letzte Priorität 2. Demzufolge finden sich dann zwei Einträge in der ersten Ereignisliste 31, ein Eintrag in der zweiten Ereignisliste 32, und die übrigen Ereignislisten sind leer.

Fig. 5b zeigt den Zustand nach Beendigung der Abarbeitung der Programmteile X und K, in dem mit der Task Py 1 RW2 inzwischen Programmteil L ausgeführt wird und mit der Task Py 4 RW1 Programmteil Y bearbeitet wird. Demnach sind nach dem Beginn der Abarbeitung des Programmteils L alle Warteschlangen leer. Wenn die Abarbeitung des Programmteils L beendet ist, werden aber drei Ereignisse erzeugt, von denen zwei - zum Anstoß der Programmteile F und M - in die erste Ereignisliste 31 und eines in die zweite Ereignisliste 32 eingetragen werden. Es liegen dann zwei Ereignisse der höchsten Priorität vor, ein weiteres Ereignis der nächstniedrigeren Priorität 2, und ein Programmteil Y der niedrigsten Priorität 4 befindet sich noch in der Ausführung.

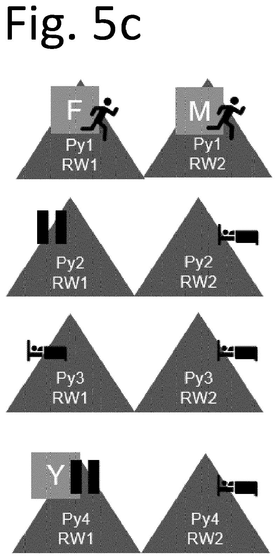

Fig. 5c zeigt, dass die zwei hochprioren Ereignisse für Programmteile F und M zu deren Ausführen führen, indem die Programmteile F und M auf den zwei Rechenwerken RW1 und RW2 abgearbeitet werden. Um dies zu erreichen, bleibt Programmteil O, das mit der zweithöchsten Priorität aufgerufen wurde, bzw. eben dieses Ereignis der Priorität 2, noch in der Warteschleife und wartet, was bei Py2RW1 grafisch angedeutet ist. Das noch laufende Programmteil Y bei Py4 RW1 unterbrochen wird, um die Abarbeitung der zwei hochprioren Programmteile F und M zu ermöglichen. Dies ist schematisch in Fig. 5c gezeigt. Wenn im Arbeitszustand der Fig. 5c eines der hochprioren Programmteile F und M abgearbeitet ist, kann als nächstes das zweitpriorisierte Programmteil O ausgeführt werden. Und wenn danach ein Rechenwerk RW frei wird, kann danach Programmteil Y beendet werden.

Auf diese Weise ist sichergestellt, dass hochpriore Programmteile zuverlässig ausgeführt werden können und nicht zufälligerweise durch womöglich lang dauernde niederpriore Prozesse blockiert sind.

### Bezugszeichenliste

- 11, 12, 21, 24, 52: Programmteile
- 13, 14, 15, 23, 25, 53: Ereignisse
- 31 bis 35: Ereignislisten
- 51: externes Ereignis
- 101: Platine
- 102: CPU, Core
- 103: CPU, Core
- 104: Kommunikationsstruktur
- 105: Kommunikationseingang
- 106: Kommunikationsausgang
- 107: Betriebssteuerung
- 110: Funktionsblock
- 111: eingehendes Ereignis
- 112: ausgehendes Ereignis
- 113: Eingangsdaten
- 114: Ausgangsdaten
- 115: Ereignisverbindung
- 116: Datenverbindung

## Patentansprüche

1. Verfahren zum Steuern des Ablaufs von Programmteilen, mit den Schritten
veranlasst durch das Auftreten eines ersten Ereignisses (E1) Ausführen eines ersten Programmteils (P1) auf einem ersten Rechenwerk (RW1), wobei dem ersten Ereignis (E1) und/oder dem ersten Programmteil (P1) eine erste Priorität (Py1) zugewiesen ist, und
veranlasst durch das Auftreten eines zweiten Ereignisses (E2) Unterbrechen der Ausführung des ersten Programmteils (P1) auf dem ersten Rechenwerk (RW1) und dann Ausführen eines zweiten Programmteils (P2) auf dem ersten Rechenwerk (RW1), wobei dem zweiten Ereignis (E2) und/oder dem zweiten Programmteil (P2) eine zweite Priorität (Py2) zugewiesen ist,
wobei die zweite Priorität (Py2) eine vorbestimmte und insbesondere benutzerdefinierte Relation zur ersten Priorität (Py1) hat, wobei die zweite Priorität (Py2) höher als die erste Priorität (Py1) ist,
wobei das erste und/oder das zweite Programmteil (P1, P2) ein funktionaler Block im Sinne der IEC 61499 oder ein Teil davon oder eine davon veranlasste Datenübertragung ist.

2. Verfahren nach einem der vorherigen Ansprüche, bei dem ein oder mehrere Programmteile Teile von Geräte- oder Anlagensteuerungsprogrammen sind, die auf einer speicherprogrammierten Steuerung laufen.

3. Verfahren nach einem der vorherigen Ansprüche,
bei dem mindestens eine Ereignisliste (31-35) geführt wird, die aufgetretene Ereignisse entsprechend zugeordneten Priorität speichern und die noch abzuarbeitenden Programmteile bezeichnen,
wobei für mehrere Prioritäten jeweils eigene Ereignislisten (31-34) geführt werden können, die jeweils aufgetretene Ereignisse der zugeordneten Priorität speichern, die noch abzuarbeitenden Programmteile bezeichnen, wobei das zweite Ereignis (E2) in die seiner Priorität (Py2) entsprechende Ereignisliste (31-34) eingetragen wird und dann, wenn in keiner Ereignisliste für eine höhere Priorität ein Eintrag vorhanden ist, entsprechend den Abarbeitungsregeln für die Einträge in der Ereignisliste (31-34) der eigenen Priorität ggf. für die Unterbrechung der Ausführung des ersten Programmteils (P1) auf dem ersten Rechenwerk (RW1) herangezogen wird.

4. Verfahren nach einem der vorherigen Ansprüche,
bei dem mehrere Tasks genützt werden, die vorab als jeweilige Ausführungsumgebungen angelegt wurden, vorzugsweise so, dass für jeden Prioritätswert ein oder mehrere Tasks angelegt werden.

5. Verfahren nach einem der vorherigen Ansprüche,
bei dem Tasks genützt werden, die in Echtzeit als jeweilige Ausführungsumgebung angelegt werden, vorzugsweise in Antwort auf ein auftretendes Ereignis, und die in Echtzeit entfernt werden, vorzugsweise am Ende der Abarbeitung eines Programmteils.
4. Verfahren nach einem der vorherigen Ansprüche, bei dem das zweite Ereignis (E2) durch ein auf einem anderen Rechenwerk (RWx) laufendes anderes Programmteil (Px) erzeugt wird.
5. Verfahren nach einem der vorherigen Ansprüche, mit den Schritten
- Einholen von Überwachungsergebnissen der Belegung und/oder Auslastung des ersten Rechenwerk (RW1), insbesondere von einer Betriebssystemfunktion, und
- nach Maßgabe der Überwachungsergebnisse beim Auftreten des zweiten Ereignisses (E2) Veranlassen der Unterbrechen und der Ausführung des zweiten Programmteils (P2) auf dem ersten Rechenwerk (RW1).

6. Verfahren nach Anspruch 5, bei dem Überwachungsergebnisse betreffend die Belegung und/oder Auslastung des ersten Rechenwerks (RW1) und eines oder mehrerer weiterer Rechenwerke (RW2, ..., RWn) eingeholt werden und nach Maßgabe des Überwachungsergebnisses beim Auftreten des zweiten Ereignisses (E2) das Veranlassen der Unterbrechen und der Ausführung des zweiten Programmteils (P2) auf dem ersten Rechenwerk (RW1) veranlasst wird.

7. Verfahren nach Anspruch 6, bei dem nach Maßgabe des Überwachungsergebnisses über die Zuweisung der Ausführung des zweiten Programmteils (P2) zu einem der überwachten Rechenwerke (RW) entschieden wird.

8. Verfahren nach Anspruch 6 oder 7, bei dem über die Zuweisung der Ausführung des zweiten Programmteils (P2) zu einem der überwachten Rechenwerke (RW) auch nach Maßgabe von Eigenschaften der überwachten Rechenwerke (RW) entschieden wird.

9. Verfahren nach einem der vorherigen Ansprüche, bei dem Programmteile (P1, P2) unterscheidbare Teile enthalten und die Unterbrechung der Ausführung des ersten Programmteils (P1) nach Abarbeitung eines im ersten Programmteil (P1) enthaltenen Teils (Ti) und vor Beginn der Abarbeitung eines im ersten Programmteil (P1) folgenden Teils (Ti+1) erfolgt, oder während der Abarbeitung eines solchen Teils (Ti).

10. Verfahren nach einem der vorherigen Ansprüche, bei dem Programmteile nach Maßgabe einer Ausführungssteuerungsplanung gemäß IEC 61499 aufgerufen und abgearbeitet werden, wobei der Aufruf eines Programmteils aus der Ausführungssteuerungsplanung das die Ausführung des ersten Programmteils bewirkende erste Ereignis und/oder das die Ausführung des zweiten Programmteils bewirkenden zweiten Ereignisses sein kann, dem eine Priorität zugewiesen werden kann oder schon zugewiesen ist, und diese Ereignisse die Festlegungen der Ausführungssteuerungsplanung überschreiben oder abwandeln können.

11. Verfahren nach einem der vorherigen Ansprüche, bei dem das Unterbrechen der Ausführung des ersten Programmteils (P1) das Sicherungsspeichern des momentan relevanten Gerätezustands umfasst, insbesondere das Speichern der Werte von Rechenwerk, Registern, Datenspeichern, Programmspeicher, Programmzeiger, Dateien, und bei dem das Fortsetzen des vorher unterbrochenen Programmteils (P1) das Laden des bei der Unterbrechung sicherungsgespeicherten Gerätezustands für das die Fortsetzung übernehmende Rechenwerk (RW) umfasst.

12. Verfahren nach einem der vorherigen Ansprüche, bei dem ein Programmteil vorzugsweise unabhängig von Prioritätszuweisungen als ununterbrechbar oder nicht gleichzeitig mehrfach ausführbar ausgewiesen ist und dann auch beim Eintritt der sonstigen Bedingungen nicht unterbrochen oder gleichzeitig mehrfach ausgeführt wird.

13. Vorrichtung gemäß IEC 61499 zur Durchführung des Verfahrens nach einem der vorherigen Ansprüche, die eine Gerätesteuerung oder eine Anlagensteuerung und/oder eine speicherprogrammierte Steuerung sein kann und mindestens einen Sensor oder Dateneingang und mindestens einen Aktor oder Datenausgang aufweisen kann.

14. Programmierverfahren, bei dem eine IEC 61499-konforme Programmierschnittstelle bereitgestellt wird, die zum Programmieren des Verfahrens nach einem der vorherigen Ansprüchel ausgelegt ist.

15. Programmierverfahren nach Anspruch 14, bei dem die Programmierschnittstelle eine grafische Benutzerschnittstelle ist oder aufweist, die zum Eingeben der Programmierung der prioritätsbedingten Unterbrechen der Ausführung des ersten Programmteils auf dem ersten Rechenwerk ausgelegt ist.

16. Programmiervorrichtung zur Durchführung des Programmierverfahrens nach Anspruch 14 oder 15.

17. Ausführungsvorrichtung für IEC 61499-konforme Programme, mit
mindestens zwei Rechenwerken (RW1 102, RW2 103) zum parallelen Ausführen von Programmteilen, die von mit Prioritäten markierten Ereignissen ausgelöst werden,
einer Betriebssteuerung (107), die das Ausführen von Programmteilen auf den Rechenwerken (RW1 102, RW2 103) basierend auf den Prioritäten steuert, die den die Programmteile auslösenden Ereignissen zugeordnet sind,
wobei die Betriebssteuerung (107) dazu ausgelegt ist, die Ausführung eines ersten Programmteils auf einem Rechenwerk zu unterbrechen und auf diesem Rechenwerk die Ausführung eines zweiten Programmteils zu veranlassen, wenn das die Ausführung des zweiten Programmteils auslösende Ereignis höher priorisiert ist als das die Ausführung des ersten Programmteils auslösende Ereignis.

## Geänderte Patentansprüche

### Geänderte Patentansprüche gemäss Regel 137(2) EPÜ.

1. Verfahren zum Steuern des Ablaufs von Programmteilen, mit den Schritten
veranlasst durch das Auftreten eines ersten Ereignisses (E1) Ausführen eines ersten Programmteils (P1) auf einem ersten Rechenwerk (RW1), wobei dem ersten Ereignis (E1) und/oder dem ersten Programmteil (P1) eine erste Priorität (Py1) zugewiesen ist, und
veranlasst durch das Auftreten eines zweiten Ereignisses (E2) Unterbrechen der Ausführung des ersten Programmteils (P1) auf dem ersten Rechenwerk (RW1) und dann Ausführen eines zweiten Programmteils (P2) auf dem ersten Rechenwerk (RW1), wobei dem zweiten Ereignis (E2) und/oder dem zweiten Programmteil (P2) eine zweite Priorität (Py2) zugewiesen ist,
wobei die zweite Priorität (Py2) höher als die erste Priorität (Py1) ist,
wobei das erste und/oder das zweite Programmteil (P1, P2) ein funktionaler Block im Sinne der IEC 61499 oder ein Teil davon oder eine davon veranlasste Datenübertragung ist,
bei dem mehrere Tasks genützt werden, die vorab als jeweilige Ausführungsumgebungen so angelegt wurden, dass für jeden Prioritätswert ein oder mehrere Tasks angelegt werden.

2. Verfahren zum Steuern des Ablaufs von Programmteilen, mit den Schritten
veranlasst durch das Auftreten eines ersten Ereignisses (E1) Ausführen eines ersten Programmteils (P1) auf einem ersten Rechenwerk (RW1), wobei dem ersten Ereignis (E1) und/oder dem ersten Programmteil (P1) eine erste Priorität (Py1) zugewiesen ist, und
veranlasst durch das Auftreten eines zweiten Ereignisses (E2) Unterbrechen der Ausführung des ersten Programmteils (P1) auf dem ersten Rechenwerk (RW1) und dann Ausführen eines zweiten Programmteils (P2) auf dem ersten Rechenwerk (RW1), wobei dem zweiten Ereignis (E2) und/oder dem zweiten Programmteil (P2) eine zweite Priorität (Py2) zugewiesen ist,
wobei die zweite Priorität (Py2) höher als die erste Priorität (Py1) ist,
wobei das erste und/oder das zweite Programmteil (P1, P2) ein funktionaler Block im Sinne der IEC 61499 oder ein Teil davon oder eine davon veranlasste Datenübertragung ist,
bei dem Tasks genützt werden, die in Echtzeit als jeweilige Ausführungsumgebung in Antwort auf ein auftretendes Ereignis angelegt werden und die in Echtzeit am Ende der Abarbeitung eines Programmteil entfernt werden s.

3. Verfahren nach einem der vorherigen Ansprüche, bei dem ein oder mehrere Programmteile Teile von Geräte- oder Anlagensteuerungsprogrammen sind, die auf einer speicherprogrammierten Steuerung laufen.

4. Verfahren nach einem der vorherigen Ansprüche,
bei dem mindestens eine Ereignisliste (31-35) geführt wird, die aufgetretene Ereignisse entsprechend zugeordneten Priorität speichern und die noch abzuarbeitenden Programmteile bezeichnen,
wobei für mehrere Prioritäten jeweils eigene Ereignislisten (31-34) geführt werden können, die jeweils aufgetretene Ereignisse der zugeordneten Priorität speichern, die noch abzuarbeitenden Programmteile bezeichnen, wobei das zweite Ereignis (E2) in die seiner Priorität (Py2) entsprechende Ereignisliste (31-34) eingetragen wird und dann, wenn in keiner Ereignisliste für eine höhere Priorität ein Eintrag vorhanden ist, entsprechend den Abarbeitungsregeln für die Einträge in der Ereignisliste (31-34) der eigenen Priorität ggf. für die Unterbrechung der Ausführung des ersten Programmteils (P1) auf dem ersten Rechenwerk (RW1) herangezogen wird.

5. Verfahren nach einem der vorherigen Ansprüche, bei dem das zweite Ereignis (E2) durch ein auf einem anderen Rechenwerk (RWx) laufendes anderes Programmteil (Px) erzeugt wird.

6. Verfahren nach einem der vorherigen Ansprüche, mit den Schritten
- Einholen von Überwachungsergebnissen der Belegung und/oder Auslastung des ersten Rechenwerk (RW1), insbesondere von einer Betriebssystemfunktion, und
- nach Maßgabe der Überwachungsergebnisse beim Auftreten des zweiten Ereignisses (E2) Veranlassen der Unterbrechen und der Ausführung des zweiten Programmteils (P2) auf dem ersten Rechenwerk (RW1).

7. Verfahren nach Anspruch 6, bei dem Überwachungsergebnisse betreffend die Belegung und/oder Auslastung des ersten Rechenwerks (RW1) und eines oder mehrerer weiterer Rechenwerke (RW2, ..., RWn) eingeholt werden und nach Maßgabe des Überwachungsergebnisses beim Auftreten des zweiten Ereignisses (E2) das Veranlassen der Unterbrechen und der Ausführung des zweiten Programmteils (P2) auf dem ersten Rechenwerk (RW1) veranlasst wird.

8. Verfahren nach Anspruch 7, bei dem nach Maßgabe des Überwachungsergebnisses über die Zuweisung der Ausführung des zweiten Programmteils (P2) zu einem der überwachten Rechenwerke (RW) entschieden wird.

9. Verfahren nach Anspruch 7 oder 8, bei dem über die Zuweisung der Ausführung des zweiten Programmteils (P2) zu einem der überwachten Rechenwerke (RW) auch nach Maßgabe von Eigenschaften der überwachten Rechenwerke (RW) entschieden wird.

10. Verfahren nach einem der vorherigen Ansprüche, bei dem Programmteile (P1, P2) unterscheidbare Teile enthalten und die Unterbrechung der Ausführung des ersten Programmteils (P1) nach Abarbeitung eines im ersten Programmteil (P1) enthaltenen Teils (Ti) und vor Beginn der Abarbeitung eines im ersten Programmteil (P1) folgenden Teils (Ti+1) erfolgt, oder während der Abarbeitung eines solchen Teils (Ti).

11. Verfahren nach einem der vorherigen Ansprüche, bei dem Programmteile nach Maßgabe einer Ausführungssteuerungsplanung gemäß IEC 61499 aufgerufen und abgearbeitet werden, wobei der Aufruf eines Programmteils aus der Ausführungssteuerungsplanung das die Ausführung des ersten Programmteils bewirkende erste Ereignis und/oder das die Ausführung des zweiten Programmteils bewirkenden zweiten Ereignisses sein kann, dem eine Priorität zugewiesen werden kann oder schon zugewiesen ist, und diese Ereignisse die Festlegungen der Ausführungssteuerungsplanung überschreiben oder abwandeln können.

12. Verfahren nach einem der vorherigen Ansprüche, bei dem das Unterbrechen der Ausführung des ersten Programmteils (P1) das Sicherungsspeichern des momentan relevanten Gerätezustands umfasst, insbesondere das Speichern der Werte von Rechenwerk, Registern, Datenspeichern, Programmspeicher, Programmzeiger, Dateien, und bei dem das Fortsetzen des vorher unterbrochenen Programmteils (P1) das Laden des bei der Unterbrechung sicherungsgespeicherten Gerätezustands für das die Fortsetzung übernehmende Rechenwerk (RW) umfasst.

13. Verfahren nach einem der vorherigen Ansprüche, bei dem ein Programmteil vorzugsweise unabhängig von Prioritätszuweisungen als ununterbrechbar oder nicht gleichzeitig mehrfach ausführbar ausgewiesen ist und dann auch beim Eintritt der sonstigen Bedingungen nicht unterbrochen oder gleichzeitig mehrfach ausgeführt wird.

14. Vorrichtung gemäß IEC 61499 zur Durchführung des Verfahrens nach einem der vorherigen Ansprüche, die eine Gerätesteuerung oder eine Anlagensteuerung und/oder eine speicherprogrammierte Steuerung sein kann und mindestens einen Sensor oder Dateneingang und mindestens einen Aktor oder Datenausgang aufweisen kann.

15. Programmierverfahren, bei dem eine IEC 61499-konforme Programmierschnittstelle bereitgestellt wird, die zum Programmieren des Verfahrens nach einem der vorherigen Ansprüche1 ausgelegt ist.

16. Programmierverfahren nach Anspruch 15, bei dem die Programmierschnittstelle eine grafische Benutzerschnittstelle ist oder aufweist, die zum Eingeben der Programmierung der prioritätsbedingten Unterbrechen der Ausführung des ersten Programmteils auf dem ersten Rechenwerk ausgelegt ist.

17. Programmiervorrichtung zur Durchführung des Programmierverfahrens nach Anspruch 15 oder 16.

18. Ausführungsvorrichtung für IEC 61499-konforme Programme, mit
mindestens zwei Rechenwerken (RW1 102, RW2 103) zum parallelen Ausführen von Programmteilen, die von mit Prioritäten markierten Ereignissen ausgelöst werden,
einer Betriebssteuerung (107), die das Ausführen von Programmteilen auf den Rechenwerken (RW1 102, RW2 103) basierend auf den Prioritäten steuert, die den die Programmteile auslösenden Ereignissen zugeordnet sind,
wobei die Betriebssteuerung (107) dazu ausgelegt ist, die Ausführung eines ersten Programmteils auf einem Rechenwerk zu unterbrechen und auf diesem Rechenwerk die Ausführung eines zweiten Programmteils zu veranlassen, wenn das die Ausführung des zweiten Programmteils auslösende Ereignis höher priorisiert ist als das die Ausführung des ersten Programmteils auslösende Ereignis, und dazu ausgelegt ist, das Steuerungsverfahren nach einem der Ansprüche 1 bis 13 durchzuführen.
